# FASCICULE DE BREVET EUROPEEN

(11) **EP 2 803 822 B1**
(45) Date de publication et mention de la délivrance du brevet: **04.12.2019**
(21) Numéro de dépôt: 13167416.0
(22) Date de dépôt: 13.05.2013
(51) Int. Cl.: F01D 9/04, F01D 25/18, F02C 6/08

(54) **Système de prélèvement d'air de turbomachine axiale**
Luftentnahmesystem aus einer axialen Turbomaschine
Air-bleeding system of an axial turbomachine

(43) Date de publication de la demande: 19.11.2014
(73) Titulaire: Safran Aero Boosters SA, 4041 Herstal (BE)
(72) Inventeur: Depaepe, David, 4000 Liège (BE)
(74) Mandataire: Lecomte & Partners

(56) Documents cités:
- EP-A1- 0 487 242
- FR-A1- 2 481 379
- US-A- 3 528 241
- US-A- 6 058 696
- US-A1- 2004 033 133
- US-A1- 2005 235 651

## Description

### Domaine technique

L'invention a trait à un redresseur de turbomachine axiale. L'invention a également trait à une turbomachine avec des moyens de pressurisation d'une chambre. Plus particulièrement, l'invention a trait à une turbomachine comportant un compresseur muni d'un redresseur avec des moyens de pressurisation d'une chambre.

### Technique antérieure

Une turbomachine présente un rotor monté mobile en rotation par rapport au stator de la turbomachine. En fonctionnement, le rotor tourne à plusieurs milliers de tours par minute. Des liaisons mécaniques telles que des roulements sont montées aux interfaces entre le stator et le rotor. Les roulements permettent de reprendre les efforts mécaniques tout en étant adaptés aux vitesses de rotation. Afin de conserver des conditions de fonctionnement optimales, ces roulements sont alimentés en huile de lubrification. En fonctionnement, cette huile peut se transformer en un brouillard d'huile.

Pour éviter que l'huile ne se répande dans le reste de la turbomachine, les roulements sont montés dans des enceintes de lubrification généralement closes. L'arbre du rotor pénètre ces enceintes, ce qui crée des points faibles en termes d'étanchéité à la jonction entre les surfaces fixes et les surfaces mobiles. Pour éviter des fuites aux jonctions, des joints labyrinthe y sont placés. Ces joints permettent de limiter les fuites malgré les conditions extrêmes auxquelles ils sont soumis.

Pour encore réduire, et de préférence supprimer les fuites d'huile, chaque joint labyrinthe est placé en contact d'une chambre pressurisée. Lors du fonctionnement de la turbomachine, la pression de la chambre pressurisée est supérieure à celle de l'enceinte de lubrification attenante. Celle-ci est alors mise en dépression par rapport à une partie de son environnement. De la sorte, le joint labyrinthe disposé à l'interface ne laisse plus subsister qu'une fuite dirigée de la chambre pressurisée vers l'enceinte de lubrification ; l'huile ne peut alors plus s'enfuir de cette dernière. Dans ces conditions, l'huile est préservée. Elle ne risque pas de se diffuser dans le reste de la turbomachine.

Pour générer la pression dans la chambre pressurisée, la turbomachine présente un système de prélèvement d'air comprimé.

Le document FR 2 698 406 A1 divulgue un dispositif de pressurisation d'une chambre entourant une enceinte de lubrification de palier. Le dispositif comprend des conduits de prélèvement d'air permettant d'acheminer l'air jusqu'à la chambre. Les conduits prélèvent l'air à l'aide d'orifices disposés en amont des derniers étages respectifs du compresseur basse pression et du compresseur haute pression. Grâce à son calculateur, le dispositif fourni un air dont la pression et la température sont maitrisées, et ce, indépendamment des modes de fonctionnement de la turbomachine. Cependant, la pression de l'air prélevé est relativement faible. Cette pression peut être insuffisante dans certaines configurations. Aussi, les pertes de charges des conduits amoindrissent la pression disponible pour pressuriser la chambre.

Le document de brevet publié EP 0 487 242 A1 divulgue un redresseur aubagé conforme au préambule de la revendication 1.

### Résumé de l'invention

### Problème technique

L'invention a pour objectif de résoudre au moins un des problèmes soulevés par l'art antérieur. L'invention a également pour objectif d'augmenter la pression disponible pour pressuriser une chambre d'une turbomachine. L'invention a également pour objectif de préserver le rendement de la turbomachine.

### Solution technique

L'invention a pour objet un redresseur aubagé de turbomachine axiale tel que défini dans la revendication 1 et comprenant au moins une paroi annulaire apte à délimiter le flux annulaire ; une rangée d'aubes s'étendant radialement depuis la paroi annulaire ; et des moyens de pressurisation d'une chambre, comprenant au moins un passage traversant l'épaisseur de la paroi annulaire et en communication avec le flux annulaire ; où les moyens de pressurisation comprennent, en outre, au moins une écope sur la paroi annulaire du côté du flux annulaire et en communication avec le passage, la ou les écopes étant ouvertes vers l'amont de sorte à capter la pression dynamique dudit flux ; et remarquable en ce que la paroi annulaire est une virole interne du redresseur.

Suivant un mode avantageux de l'invention, la ou les écopes comprennent un bord de séparation du flux annulaire, ledit bord s'étendant généralement transversalement à la direction d'écoulement du flux annulaire, à distance, selon une direction radiale, d'un bord correspondant de la paroi annulaire, l'ouverture des écopes s'étendant entre le bord de séparation et le bord correspondant de la paroi.

Suivant un mode avantageux de l'invention, la ou les écopes comprennent une paroi de guidage s'étendant essentiellement dans le sens d'écoulement du flux annulaire depuis le bord de séparation vers la paroi annulaire.

Suivant un mode avantageux de l'invention, la ou les écopes sont disposées en aval des aubes.

Suivant un mode avantageux de l'invention, les aubes présentent un espacement moyen L4, l'écope s'étendant circonférentiellement sur plus de 30% de l'espacement moyen L4, préférentiellement plus de 60%, plus préférentiellement plus de 150%.

Suivant un mode avantageux de l'invention, la section longitudinale de la ou des écopes présente un profil courbe, de manière à pouvoir dévier progressivement une partie du flux annulaire au travers de la paroi annulaire.

Suivant un mode avantageux de l'invention, la dimension axiale du ou des passages est supérieure à sa dimension radiale, préférentiellement au moins trois fois supérieure.

Suivant un mode avantageux de l'invention, la ou les écopes et la paroi annulaire sont venues de matière, préférentiellement la ou les écopes sont réalisées par découpe et emboutissage de la paroi annulaire.

Suivant un mode avantageux de l'invention, une portion de la paroi annulaire directement en amont de l'ouverture de la ou des écopes est inclinée de manière à augmenter la section de ladite ouverture.

Suivant un mode avantageux de l'invention, le redresseur comprend une paroi externe essentiellement concentrique à la paroi annulaire, les aubes s'étendant entre lesdites parois.

Suivant un mode avantageux de l'invention, le redresseur comprend un carter intermédiaire avec deux parois annulaires intermédiaires concentriques rapportées aux parois annulaires interne et externe respectivement, lesdites parois comprenant des bras de carter qui s'étendent radialement, la ou les écopes étant disposées selon une direction circonférentielle au droit et/ou en amont des bras de carter.

Suivant un mode avantageux de l'invention, le passage traverse radialement la paroi annulaire.

Suivant un mode avantageux de l'invention, au moins au niveau de l'écope, l'écoulement du flux annulaire présente une composante axiale et une composante tangentielle.

Suivant un mode avantageux de l'invention, la paroi annulaire comprend une couche annulaire de matériau abradable, le passage traversant l'épaisseur de la couche de matériau abradable.

Les épaisseurs de la paroi annulaire et la couche d'abradable sont mesurées perpendiculairement à la surface annulaire de la paroi annulaire qui est en contact du flux annulaire.

Suivant un mode avantageux de l'invention, l'écope est disposée en aval des aubes de la dernière rangée annulaire d'aubes statoriques, préférentiellement à plus de 2,00 mm.

Suivant un mode avantageux de l'invention, les moyens de pressurisation sont essentiellement configurés pour communiquer la pression du flux annulaire à la chambre pressurisée.

Suivant un mode avantageux de l'invention, la chambre est généralement close.

Suivant un mode avantageux de l'invention, la chambre est essentiellement, préférentiellement uniquement, en communication avec la ou les écopes et avec des moyens d'étanchéité qui assurent son étanchéité.

Suivant un mode avantageux de l'invention, la chambre est généralement annulaire.

Suivant un mode avantageux de l'invention, l'éventuelle circulation de gaz au travers de la chambre pressurisée est essentiellement centripète.

Suivant un mode avantageux de l'invention, l'écope présente une réduction d'épaisseur par rapport à la paroi annulaire là où elle est disposée.

Suivant un mode avantageux de l'invention, la paroi annulaire comprend un matériau métallique tel du titane, ou un matériau composite, ou un matériau céramique.

Suivant un mode avantageux de l'invention, l'écope est plus longue axialement que haute radialement, préférentiellement trois fois plus longue, plus préférentiellement six fois plus longue.

L'invention a également trait à un compresseur axial comprenant au moins un redresseur aubagé, remarquable en ce que le ou au moins un des redresseurs est conforme à l'invention, préférentiellement le compresseur comprend plusieurs redresseurs aubagés dont un redresseur aval, le redresseur aval étant conforme à l'invention.

Suivant un mode avantageux de l'invention, le compresseur comprend un tambour et au moins une rangée annulaire d'aubes rotoriques montées sur le tambour, la ou les écopes étant disposées axialement en aval du tambour, ou axialement au niveau du tambour qui présente des ouvertures disposées axialement au droit de l'écope et radialement à l'intérieur de la paroi annulaire.

L'invention a également trait à une turbomachine axiale comprenant un compresseur et/ou une turbine avec au moins un redresseur, remarquable en ce que le ou au moins un des redresseurs est conforme à l'invention et/ou le compresseur est conforme à l'invention, préférentiellement la turbomachine comprend une enceinte de lubrification, une chambre de pressurisation en communication avec la ou les écopes, des moyens d'étanchéité à la jonction entre la chambre de pressurisation et l'enceinte de lubrification.

Suivant un mode avantageux de l'invention, la virole interne entoure la chambre pressurisée, plus préférentiellement la virole interne comprend des moyens d'étanchéité en amont et en aval de l'écope.

Suivant un mode avantageux de l'invention, l'écope peut être disposée sur l'une des viroles internes du compresseur ou de la turbine.

### Avantages apportés

L'invention permet de pressuriser une chambre. Elle permet de supprimer la fuite d'huile pouvant s'échapper d'une enceinte de lubrification via un joint labyrinthe. L'écope s'étend radialement dans la veine annulaire, ce qui permet de bénéficier de la pression dynamique du flux. Elle peut ainsi être disposée librement axialement sur le compresseur, également en amont puisque le flux annulaire présente déjà une vitesse importante en aval de la soufflante.

L'invention offre une pression disponible élevée, également lorsque l'écope est disposée sur un compresseur basse pression. La configuration de l'invention autorise de pressuriser directement le joint labyrinthe en augmentant la pression dans le tambour. Il est à souligner que par rapport à l'état de l'art, l'invention permet de se dispenser de moyens de cloisonnement complémentaires du joint labyrinthe. De même, des tuyaux reliant l'écope aux moyens de cloisonnement deviennent superflus.

L'invention permet d'additionner les pressions statique et dynamique du flux annulaire. La configuration de l'écope et du passage permettent de réduire les pertes de charge. Ainsi, la pression dans la chambre pressurisée est maximisée pour des conditions de fonctionnement données. Bien que l'écope forme un obstacle dans le flux, son impact est négligeable puisque ce flux serait de toutes façons perturbé par le bras de carter situé en aval. Le rendement de la turbomachine est donc préservé.

L'écope peut être réalisée sur une virole interne de redresseur. La présence de l'écope permet d'en modifier la réponse vibratoire, et éventuellement de favoriser l'amortissement vibratoire. La forme de l'écope qui s'étend radialement dans le flux augmente les possibilités d'amorti des vibrations.

### Brève description des dessins

La figure 1 représente une turbomachine axiale selon l'invention.
La figure 2 est un schéma d'un compresseur de turbomachine selon un premier mode de réalisation l'invention.
La figure 3 illustre une coupe d'un redresseur selon le premier mode de réalisation de l'invention.
La figure 4 représente une vue isométrique d'une écope selon le premier mode de réalisation de l'invention.
La figure 5 représente une vue de face d'une portion du redresseur selon le premier mode de réalisation de l'invention.
La figure 6 illustre une coupe d'un redresseur selon un deuxième mode de réalisation de l'invention.
La figure 7 illustre une coupe d'un redresseur selon un troisième mode de réalisation de l'invention.

### Description des modes de réalisation

Dans la description qui va suivre, les termes intérieur, interne, extérieur ou externe renvoient à un positionnement par rapport à l'axe de rotation d'une turbomachine axiale.

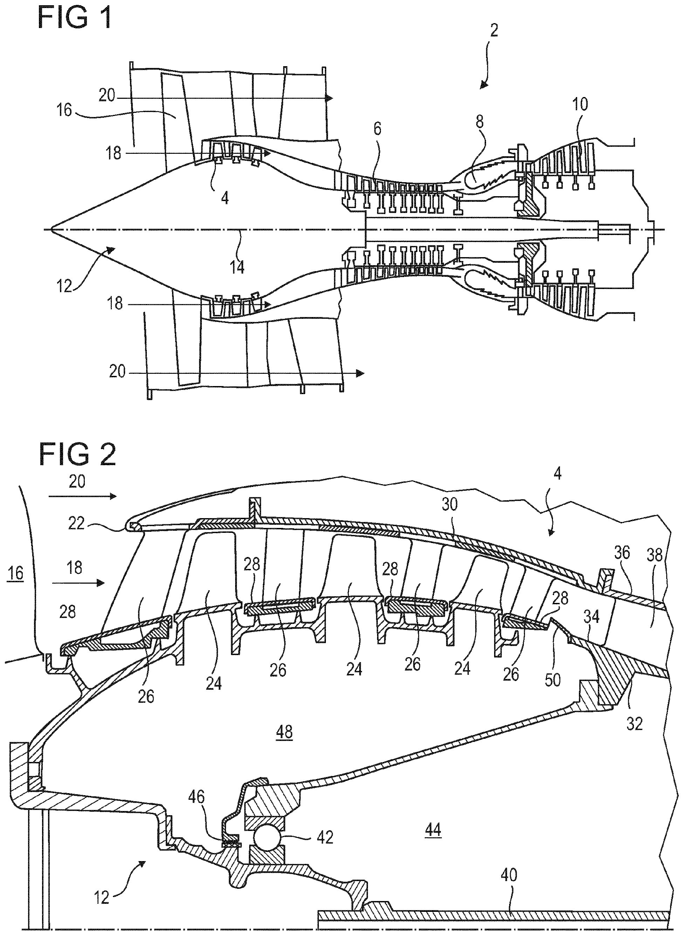

La figure 1 schématise une turbomachine axiale. Il s'agit dans ce cas précis d'un turbopropulseur double-flux. Le turbopropulseur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Des moyens de démultiplication peuvent augmenter la vitesse de rotation transmise aux compresseurs. Ou encore, les différents étages de turbines peuvent chacun être reliés aux étages de compresseur via des arbres concentriques. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 10.

Un ventilateur d'entrée communément désigné soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Les flux primaire 18 et secondaire 20 sont des flux annulaires, ils sont canalisés par le carter de la turbomachine. A cet effet, le carter présente des parois cylindriques ou viroles qui peuvent être internes et externes.

La figure 2 est une vue en coupe d'un compresseur basse-pression 4 d'une turbomachine axiale 2 telle que celle de la figure 1. On peut y observer une partie de la soufflante 16 et le bec de séparation 22 du flux primaire 18 et du flux secondaire 20. Le rotor 12 comprend plusieurs rangées d'aubes rotoriques 24, en l'occurrence trois.

Le compresseur basse pression 4 comprend au moins un redresseur, préférentiellement plusieurs redresseurs. En l'occurrence, le compresseur basse pression 4 comprend quatre redresseurs qui contiennent chacun au moins une paroi annulaire et une rangée d'aubes statoriques 26. Préférentiellement chaque redresseur comprend deux parois annulaires, une intérieure 28 et une extérieure 30, qui sont concentriques et coaxiales. Une paroi annulaire extérieure 30 peut être commune à plusieurs redresseurs. Une paroi annulaire intérieure 28 peut être une virole intérieure 28 fixée aux extrémités intérieures des aubes statoriques 26 d'une même rangée annulaire. Les redresseurs sont associés à la soufflante16 ou à une rangée d'aubes rotoriques 24 pour redresser le flux d'air, de sorte à convertir la vitesse du flux en pression.

Les aubes statoriques 26 s'étendent essentiellement radialement depuis la paroi annulaire extérieure 30, et peuvent y être fixées à l'aide d'un axe. Elles sont régulièrement espacées les unes des autres, et présentent une même orientation angulaire dans le flux. Avantageusement, ces aubes sont identiques. Eventuellement, l'espacement entre les aubes peut varier localement tout comme l'orientation angulaire. Le compresseur haute pression 6 peut montrer une construction équivalente.

Le compresseur basse pression 4 comprend un carter, par exemple un carter intermédiaire 32 qui relie mécaniquement et hydrauliquement le compresseur basse pression 4 au compresseur haute pression 6. Le carter intermédiaire 32 comprend une paroi annulaire intermédiaire intérieure 34 et une paroi annulaire intermédiaire extérieure 36 qui délimitent une veine annulaire intermédiaire. Ces parois intermédiaires peuvent être dans la continuité des parois annulaires intérieures 28 et extérieures 30 des compresseurs basse 4 et haute pression 6.

Le carter intermédiaire 32 peut comprendre des bras de carter 38 qui s'étendent radialement au travers de la veine intermédiaire. Ces bras de carter 38 sont des supports qui peuvent être configurés pour reprendre au moins partiellement les efforts de poussée de la soufflante 16. Ils peuvent être creux afin de permettre une circulation de fluide ou le passage de transmissions mécaniques.

Le rotor 12 est monté sur un abre tournant 40 par rapport au carter 32 à l'aide de roulements 42. Ces roulements 42 sont chacun disposés dans une enceinte de lubrification 44 où règne un brouillard d'huile. Afin d'éviter de relâcher cette huile dans le reste de la turbomachine, l'enceinte de lubrification 44 est close et essentiellement étanche. Elle comprend à cet effet un joint amont 46. Le joint amont 46 peut être un joint labyrinthe 46.

Afin de refouler une éventuelle fuite résiduelle, le joint amont 46 est en communication avec une chambre pressurisée 48. Cette dernière peut également entourer partiellement l'enceinte de lubrification 44. Lors du fonctionnement du compresseur 4, la pression de la chambre pressurisée 48 est supérieure à celle de l'enceinte de lubrification 44.

Afin de pouvoir maintenir la chambre 48 à une pression requise, au moins un des redresseurs comprend des moyens de pressurisation. Les moyens de pressurisation comprennent au moins une écope de pressurisation 50. Préférentiellement les moyens de pressurisation comprennent plusieurs écopes 50. Avantageusement les écopes 50 sont disposées axialement au même niveau. La ou les écopes 50 peuvent être disposées axialement au niveau d'un des compresseurs. Préférentiellement, la ou les écopes 50 sont disposées sur le redresseur aval du compresseur basse pression 4. Les écopes 50 peuvent être disposées axialement en amont des bras de carter 38.

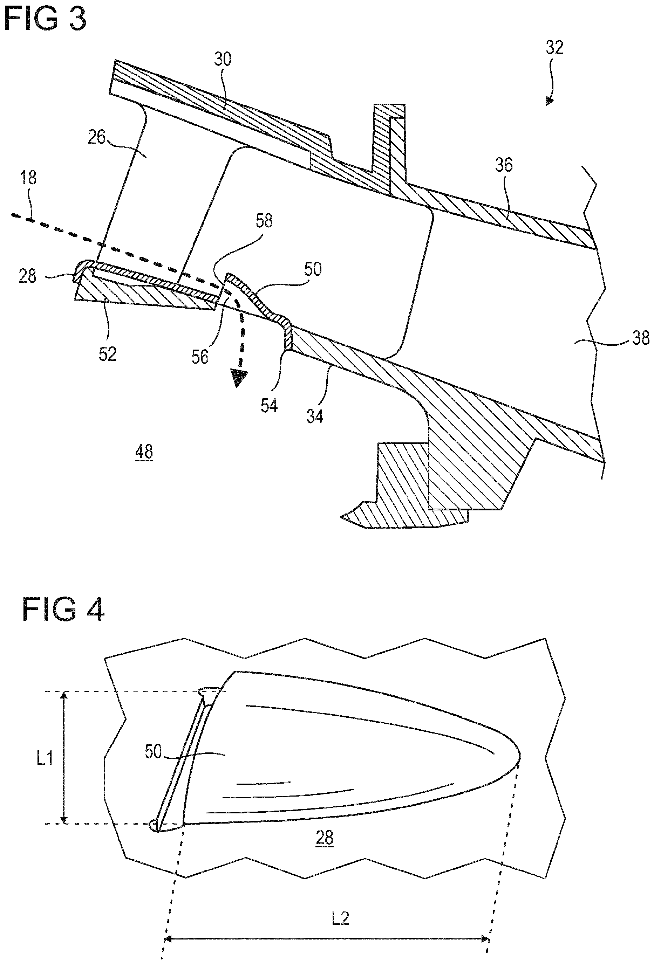

La figure 3 représente une partie aval du compresseur basse pression 4 selon l'invention.

Le compresseur basse pression 4 présente un redresseur aval. Le redresseur aval présente une virole interne 28 avec une section en « U » inversé. La virole interne 28 comporte des moyens d'étanchéité. Les moyens d'étanchéité peuvent comprendre une couche annulaire de matériau abradable 52, qui peut être appliquée sur la surface intérieure de la virole interne 28. La couche d'abradable 52 est destinée à coopérer par abrasion avec des nervures annulaires formées sur la surface extérieure du rotor. Les moyens d'étanchéité de la virole interne 28 peuvent également comprendre une portion 54 s'étendant radialement et qui est plaquée contre la paroi intermédiaire interne 34 du carter intermédiaire 32. Ces moyens d'étanchéité sont disposés respectivement en amont et en aval de la virole interne 28 de sorte à assurer une étanchéité entre l'intérieur et l'extérieur de la virole interne 28. Elle est ainsi apte à entourer de manière étanche la chambre pressurisée.

Les moyens de pressurisation comprend une écope de pressurisation 50 disposée sur la virole interne 28. L'écope 50 est en communication avec le flux annulaire 18, préférentiellement directement. L'écope 50 est disposée en aval de l'aube statorique 26, là où axialement la pression statique est la plus élevée dans le redresseur. Elle fait saillie par rapport à la virole interne 28, et est ouverte dans le flux annulaire vers l'amont. De la sorte, l'écope permet de capter la pression dynamique du flux annulaire. L'écope 50 permet d'additionner la pression statique et la pression dynamique du flux annulaire, et de transmettre la pression totale à la chambre pressurisée 48.

Les moyens de pressurisation comprennent un passage 56 apte à transmettre une pression. Le passage 56 traverse l'épaisseur de la virole interne 28, préférentiellement directement. Le passage 56 est au moins partiellement délimité par l'écope 50. Le passage 56 est ouvert vers l'amont, selon la direction locale d'écoulement du flux annulaire. Le passage 56 peut traverser la couche d'abradable 52. Ainsi, l'écope 50 permet de communiquer directement la pression totale du flux annulaire à la chambre pressurisée 48. Elle reduit les pertes de charges et facilite une éventuelle circulation.

Le passage 56 présente une entrée et une sortie. L'aire de la sortie est supérieure à l'aire de l'entrée, préfentiellement au moins trois fois supérieure. L'entrée s'étend perpendiculairement par rapport à la surface extérieure de la virole interne 28, et la sortie est généralement affleurante à la virole interne 28. La sortie forme une ouverture dans la virole interne 28. L'entrée du passage forme un goulet 58 ou section de passage minimale 58 qui s'étend transversalement dans le flux annulaire. La section de passage minimale 58 s'étend généralement selon un plan perpendiculaire au vecteur vitesse au niveau de l'écope 50 correspondante. De la sorte, l'écope 50 bénéficie au maximum de la pression dynamique du flux. On souligne que c'est la surface de la section de passage minimale 58 qui permet de capturer une partie du flux annulaire et de bénéficier de sa pression dynamique.

La figure 4 schématise une vue isométrique d'une écope 50 selon le premier mode de réalisation de l'invention.

L'écope 50 est courbe et configurée pour pouvoir dévier progressivement une partie du flux annulaire. Elle présente un profil axial et/ou tangentiel courbe. Le profil axial de l'écope 50 est plus long axialement que haut radialement. L'écope 50 présente une largeur circonférientielle L1 inférieure ou égale à sa longueur axiale L2.

L'écope 50 est venue de matière avec la virole interne 28. Avantageusemsent, la virole interne est réalisée en matériau métallique tel du titane. Une virole brute est découpée de sorte à réaliser une fente. Puis, elle est dérformée radialement du côté aval de la fente.

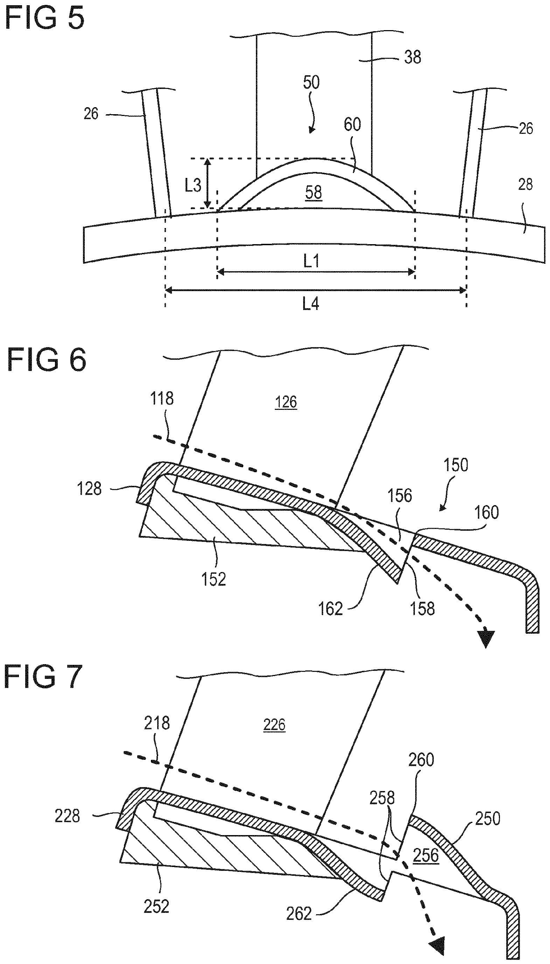

La figure 5 représente une vue de face d'une portion du redresseur selon le premier mode de réalisation de l'invention.

L'écope 50 peut être disposée circonférentiellement sur le redresseur entre deux aubes 26 consécutives. Elle est préférentiellement disposée circonférentiellement au droit d'un bras de carter 38. De la sorte, les perturbations qu'elle génère sont entrainées par le flux primaire jusqu'au bras de carter 38. En raison de son épaisseur et de son profil, le bras de carter 38 crée également des perturbations dans le flux annulaire. Ces perturbations se mélangent à celles générées par l'écope 50. L'impact du mélange de ces perturbations sur le rendement de la turbomachine est inférieur à la l'addition des impacts des perturbations pris séparément. Le rendement de la turbomachine est donc préservé.

L'écope 50 présente un bord de séparation 60 ou bord d'attaque 60. Le bord de séparation 60 sépare une partie du flux annulaire du reste du flux. Il délimite la section de passage minimale 58. Il s'étend transversalement à la direction d'écoulement du flux annulaire. Il délimite axialement le profil de l'écope 50. L'écope comprend une paroi de guidage reliant le bord de séparation 60 au profil radial général de la paroi annulaire 28.

L'écope 50 présente une largeur tangentielle L1 supérieure à sa hauteur radiale L3, préférentiellement au moins deux fois, plus préférentiellement au moins cinq fois. Les aubes statoriques 26 présentent un écartement circonférentiel moyen L4. La largeur tangentielle L1 est supérieure à 20% de l'écartement L4, préférentiellement supérieure à 80%, plus préférentiellement supérieure à 150%.

La figure 6 représente une coupe d'un redresseur selon un deuxième mode de réalisation de l'invention. Cette figure 6 reprend la numérotation des figures précédentes pour les éléments identiques ou similaires, la numération étant toutefois incrémentée de 100. Il est par ailleurs notamment fait référence à la description de la figure précédente pour ses éléments similaires ou équivalents.

La paroi annulaire 128 comprend une portion de paroi inclinée 162 du côté opposé au flux annulaire 118. En fonctionnement, une partie du flux annulaire 118 longe la surface extérieure de cette portion de paroi inclinée 162. En aval de cette portion 162, le redresseur comprend une écope 150. Cette écope 150 peut être formée par la paroi annulaire 128. L'écope 150 fait saillie dans la partie de flux annulaire qui a été dévié le long de la portion de paroi inclinée 162. Le passage 156 est délimité par l'écope 150 et la portion de paroi inclinée 162.

La portion de paroi inclinée 162 est plus longue axialement que haute radialement, de sorte à faciliter le changement de direction pour passer sous la paroi annulaire 128. Cette configuration permet de réduire les perturbations que subit le flux annulaire lorsqu'il traverse la paroi annulaire 128.

La figure 7 représente une coupe d'un redresseur selon un troisième mode de réalisation de l'invention. Cette figure 7 reprend la numérotation des figures précédentes pour les éléments identiques ou similaires, la numération étant toutefois incrémentée de 200. Il est par ailleurs notamment fait référence à la description de la figure précédente pour ses éléments similaires ou équivalents.

Les moyens de pressurisation comprennent une écope de pressurisation 250, et une portion de paroi inclinée 262 formant un renflement. Le passage 256 et le renflement sont en communication axialement et/ou radialement. L'écope 250 et la portion de paroi inclinée 262 sont disposées sur la paroi annulaire 228. L'écope 250 et la portion de paroi inclinée 262 font saillie par rapport à la paroi annulaire 228 dans des sens opposés.

Cette configuration permet d'augmenter la hauteur radiale de la section de passage minimale 258, et donc d'augmenter l'éventuel débit le traversant. Cette augmentation de hauteur est permise tout en limitant l'intrusion dans le flux annulaire 218.
de paroi inclinée 262 font saillie par rapport à la paroi annulaire 228 dans des sens opposés.

Cette configuration permet d'augmenter la hauteur radiale de la section de passage minimale 258, et donc d'augmenter l'éventuel débit le traversant. Cette augmentation de hauteur est permise tout en limitant l'intrusion dans le flux annulaire 218.

## Revendications

1. Redresseur aubagé de turbomachine axiale (2), comprenant :
- une paroi annulaire (28 ; 128 ; 228) apte à délimiter un flux annulaire (18 ; 118 ; 218) ;
- une rangée d'aubes (26 ; 126 ; 226) s'étendant radialement depuis la paroi annulaire (28 ; 128 ; 228) ; et
- des moyens de pressurisation d'une chambre (48), comprenant au moins un passage (56 ; 156 ; 256) traversant l'épaisseur de la paroi annulaire (28 ; 128 ; 228) et en communication avec le flux annulaire (18 ; 118 ; 218), et au moins une écope (50 ; 150 ; 250) sur la paroi annulaire (28 ; 128 ; 228) du côté du flux annulaire (18 ; 118 ; 218) et en communication avec le passage (56 ; 156 ; 256), la ou les écopes (50 ; 150 ; 250) étant ouvertes vers l'amont de sorte à capter la pression dynamique dudit flux (18 ; 118 ; 218) ;
**caractérisé en ce que**
la paroi annulaire (28 ; 128 ; 228) est une virole interne du redresseur.

2. Redresseur selon la revendication 1, **caractérisé en ce que** la ou les écopes (50 ; 150 ; 250) comprennent un bord de séparation (60 ; 160, 260) du flux annulaire (18 ; 118 ; 218), ledit bord s'étendant généralement transversalement à la direction d'écoulement du flux annulaire, à distance, selon une direction radiale, d'un bord correspondant de la paroi annulaire (28 ; 128 ; 228), l'ouverture des écopes (50 ; 150 ; 250) s'étendant entre le bord de séparation et le bord correspondant de la paroi.

3. Redresseur selon la revendication 2, caractérisé en que la ou les écopes (50 ; 150 ; 250) comprennent une paroi de guidage s'étendant essentiellement dans le sens d'écoulement du flux annulaire depuis le bord de séparation (60 ; 160, 260) vers la paroi annulaire.

4. Redresseur selon l'une des revendications 1 à 3, **caractérisé en ce que** la ou les écopes (50 ; 150 ; 250) sont disposées en aval des aubes (26 ; 126 ; 226).

5. Redresseur selon la revendication 4, **caractérisé en ce que** les aubes (26 ; 126 ; 226) présentent un espacement moyen L4, l'écope s'étendant circonférentiellement sur plus de 30% de l'espacement moyen L4, préférentiellement plus de 60%, plus préférentiellement plus de 150%.

6. Redresseur selon l'une des revendications 1 à 5, **caractérisé en ce que** la section longitudinale de la ou des écopes (50 ; 150 ; 250) présente un profil courbe, de manière à pouvoir dévier progressivement une partie du flux annulaire au travers de la paroi annulaire.

7. Redresseur selon l'une des revendications 1 à 6, **caractérisé en ce que** la dimension axiale du ou des passages (56 ; 156 ; 256) est supérieure à sa dimension radiale, préférentiellement au moins trois fois supérieure.

8. Redresseur selon l'une des revendications 1 à 7, **caractérisé en ce que** la ou les écopes (50 ; 150 ; 250) et la paroi annulaire (28 ; 128 ; 228) sont venues de matière, préférentiellement la ou les écopes sont réalisées par découpe et emboutissage de la paroi annulaire.

9. Redresseur selon l'une des revendications 1 à 8, **caractérisé en ce qu'**une portion (162 ; 262) de la paroi annulaire (128 ; 228) directement en amont de l'ouverture de la ou des écopes (150 ; 250) est inclinée de manière à augmenter la section de ladite ouverture.

10. Redresseur selon l'une des revendications 1 à 9, **caractérisé en ce que** le redresseur comprend une paroi externe (30 ; 36) essentiellement concentrique à la paroi annulaire (28 ; 128 ; 228), les aubes (26 ; 126 ; 226) s'étendant entre lesdites parois.

11. Redresseur selon la revendication 10, **caractérisé en ce qu'**il comprend un carter intermédiaire (32) avec deux parois annulaires intermédiaires concentriques (34 ; 36) rapportées aux parois annulaires interne et externe respectivement, lesdites parois (34 ; 36) comprenant des bras de carter (38) qui s'étendent radialement, la ou les écopes (50) étant disposées selon une direction circonférentielle au droit et/ou en amont des bras de carter (38).

12. Compresseur (4 ; 6) axial comprenant au moins un redresseur aubagé, **caractérisé en ce que** le ou au moins un des redresseurs est conforme à l'une des revendications 1 à 11, préférentiellement le compresseur (4 ; 6) comprend plusieurs redresseurs aubagés dont un redresseur aval, le redresseur aval étant conforme à l'une des revendications 1 à 11.

13. Compresseur (4 ; 6) selon la revendication 12, **caractérisé en ce qu'**il comprend un tambour et au moins une rangée annulaire d'aubes rotoriques (24) montées sur le tambour, la ou les écopes (50 ; 150 ; 250) étant disposées axialement en aval du tambour, ou axialement au niveau du tambour qui présente des ouvertures disposées axialement au droit de l'écope et radialement à l'intérieur de la paroi annulaire.

14. Turbomachine axiale (2) comprenant un compresseur (4 ; 6) et/ou une turbine (8) avec au moins un redresseur, **caractérisée en ce que** le ou au moins un des redresseur est conforme à l'une des revendications 1 à 11 et/ou le compresseur (4 ; 6) est conforme à l'une des revendications 12 à 13, préférentiellement la turbomachine comprend une enceinte de lubrification (44), une chambre de pressurisation (48) en communication avec la ou les écopes (50 ; 150 ; 250), des moyens d'étanchéité (46) à la jonction entre la chambre de pressurisation (48) et l'enceinte de lubrification (44).

15. Turbomachine (2) selon la revendication 14, **caractérisée en ce que** la virole interne (28 ; 128 ; 228) entoure la chambre pressurisée (48), plus préférentiellement la virole interne (28 ; 128 ; 228) comprend des moyens d'étanchéité (52 ; 54) en amont et en aval de l'écope (50 ; 150 ; 250).

## Patentansprüche

1. Blätterströmungsleitrichter einer axialen Turbomaschine (2), umfassend:
- eine ringförmige Wand (28; 128; 228), die dazu gestaltet ist, einen ringförmigen Fluss (18; 118; 218) zu begrenzen;
- eine Reihe von Blättern (26; 126; 226), die sich radial von der ringförmigen Wand (28; 128; 228) aus erstreckt, und
- Mittel zum unter Druck setzen einer Kammer (48), umfassend zumindest einen Durchgang (56; 156; 256), der sich durch die Dicke der ringförmigen Wand (28; 128; 228) erstreckt und in Verbindung mit dem ringförmigen Fluss (18; 118; 218) ist, und zumindest eine Schaufel (50; 150; 250) auf der ringförmigen Wand (28; 128; 228) auf der Seite des ringförmigen Flusses (18; 118; 218) und in Verbindung mit dem Durchgang (56; 156; 256), wobei die Schaufel(n) (50; 150; 250) in der stromaufwärtigen Richtung offen sind, um so den dymanischen Druck des besagten Flusses (18; 118; 218) aufzufangen;
**gekennzeichnet dadurch, dass** die ringförmige Wand (28; 128; 228) eine innere Umhüllung des Strömungsleitrichters ist.

2. Strömungsleitrichter gemäß Anspruch 1, **gekennzeichnet dadurch, dass** die Schaufel(n) (50; 150; 250) einen Trennungsrand (60; 160; 260) des ringförmigen Flusses (18; 118; 218) umfassen, wobei der besagte Rand sich allgemein quer zur der Richtung des Flusses des ringförmigen Flusses und in radialer Richtung beanstandet von einem entspechenden Rand der ringförmigen Wand (28; 128; 228) erstreckt, wobei die Öffnung der Schaufeln (50; 150; 250) sich zwischen dem Trennungsrand und dem entsprechenden Rand der Wand erstreckt.

3. Strömungsleitrichter gemäß Anspruch 2, **gekennzeichnet dadurch, dass** die Schaufel(n) (50; 150; 250) eine Führungswand umfassen, die sich im Wesentlichen in Richtung des Verlaufes des ringförmigen Flusses von dem Trennungsrand (60; 160; 260) hin zu der ringförmigen Wand erstreckt.

4. Strömungsleitrichter gemäß einem der Ansprüche 1 bis 3, **gekennzeichnet dadurch, dass** die Schaufel(n) (50; 150; 250) stromabwärts von den Blättern (26; 126; 226) angeordnet sind.

5. Strömungsleitrichter gemäß Anspruch 4, **gekennzeichnet dadurch, dass** die Blätter (26; 126; 226) einen mittleren Abstand L4 haben, wobei die Schaufel sich in Umlaufsrichtung über mehr als 30% des mittleren Abstandes L4 erstreckt, vorzugsweise über mehr als 60%, noch bevorzugter über mehr als 150%.

6. Strömungsleitrichter gemäß einem der Ansprüche 1 bis 5, **gekennzeichnet dadurch, dass** der longitudinale Querschnitt der Schaufel(n) (50; 150; 250) ein gekrümmtes Profil hat, um so schrittweise einen Teil des ringförmigen Flusses durch die ringförmige Wand ableiten zu können.

7. Strömungsleitrichter gemäß einem der Ansprüche 1 bis 6, **gekennzeichnet dadurch, dass** die axiale Dimension des oder der Durchgänge (56; 156; 256) größer ist als ihre radiale Dimension, vorzugsweise zumindest dreimal größer.

8. Strömungsleitrichter gemäß einem der Ansprüche 1 bis 7, **gekennzeichnet dadurch, dass** die Schaufel(n) (50; 150; 250) und die ringförmige Wand (28; 128; 228) einstückig sind, wobei die Schaufel(m) vorzugsweise durch Zuschneiden und Stanzen der ringförmigen Wand hergestellt sind.

9. Strömungsleitrichter gemäß einem der Ansprüche 1 bis 8, **gekennzeichnet dadurch, dass** ein Teil (162; 262) der ringförmigen Wand (128; 228) direkt stromaufwärts der Öffnung der Schaufel(n) (150; 250) geneigt ist, um den Bereich der besagten Öffnung zu vergrößern.

10. Strömungsleitrichter gemäß einem der Ansprüche 1 bis 9, **gekennzeichnet dadurch, dass** der Strömungsleitrichter eine äußere Wand (30; 36) umfasst, die im Wesentlichen konzentrisch zu der ringförmigen Wand (28; 128; 228) ist, wobei die Blätter (26; 126; 226) sich zwischen den besagten Wänden erstrecken.

11. Strömungsleitrichter gemäß Anspruch 10, **gekennzeichnet dadurch, dass** er ein Zwischengehäuse (32) mit zwei ringförmigen konzentrischen Zwischenwänden (34; 36) umfasst, die an der inneren bzw. äußeren ringförmigen Wand befestigt sind, wobei die besagten Wände (34; 36) Gehäusearme (38) umfassen, die sich radial erstrecken, und die Schaufel(n) (50) in Umlaufsrichtung bei und/oder stromaufwärts der Gehäusearme (38) angeordnet sind.

12. Axialer Kompressor (4; 6) umfassend zumindest einen Blätterströmungsleitrichter, **gekennzeichnet dadurch, dass** der oder zumindest einer der Blätterströmungsleitrichter gemäß einem der Ansprüche 1 bis 11 ist, wobei der Kompressor (4; 6) vorzugsweise mehrere Blätterströmungsleitrichter umfasst, von denen einer ein stromabwärtiger Strömungsleitrichter ist, und wobei der stromabwärtige Strömungsleitrichter gemäß einem der Ansprüche 1 bis 11 ist.

13. Kompressor gemäß Anspruch 12, **gekennzeichnet dadurch, dass** er eine Trommel und mindestens eine ringförmige Reihe von Rotorblättern (24) umfasst, die auf der Trommel montiert sind, wobei die Schaufel(n) (50; 150; 250) axial stromabwärts von der Trommel angeordnet sind oder axial auf der Höhe der Trommel, welche Öffnungen hat, die axial bei der Schaufel und radial im Inneren der ringförmigen Wand angeordnet sind.

14. Axiale Turbomaschine (2) umfassend einen Kompressor (4; 6) und/oder eine Turbine (8) mit zumindest einem Strömungsleitrichter, **gekennzeichnet dadurch, dass** der oder zumindest einer der Strömungsleitrichter gemäß einem der Ansprüche 1 bis 11 ist und/oder dass der Kompressor (4; 6) gemäß einem der Ansprüche 12 oder 13 ist, wobei die Turbomaschine vorzugsweise eine Schmierungsumfassung (44), eine Druckbeaufschlagungskammer (48) in Verbindung mit der oder den Schaufel(n) (50; 150; 250) und Dichtmittel (46) an der Verbindung zwischen der Druckbeaufschlagungskammer (48) und der Schmierungsumfassung (44) umfasst.

15. Turbomaschine gemäß Anspruch 14, **gekennzeichnet dadurch, dass** die innere Umhüllung (28; 128; 228) die unter Druck stehende Kammer (48) umgibt, wobei noch bevorzugter die innere Umhüllung (28; 128; 258) Dichtungsmittel (52; 54) stromaufwärts und stromabwärts der Schaufel (50; 150; 250) umfasst.

## Claims

1. Bladed stator of an axial turbomachine (2), comprising:
- at least one annular wall (28; 128; 228) designed to delimit an annular flow (18; 118; 218);
- a row of blades (26; 126; 226) extending radially from the annular wall (28; 128; 228), and
- means for pressurizing a chamber (48), comprising at least one passage (56; 156; 256) extending through the thickness of the annular wall (28; 128; 228) and in communication with the annular flow (18; 118; 218), and at least one scoop (50; 150; 250) on the annular wall (28; 128; 228) on the side of the annular flow (18; 118; 218) and in communication with the passage (56; 156; 256), the scoop(s) (50; 150; 250) being open in the upstream direction so as to capture the dynamic pressure of the said flow (18; 118; 218);
**characterized in that** the annular wall (28; 12; 228) is an inner shroud of the stator.

2. Stator in accordance with Claim 1, **characterized in that** the scoop(s) (50; 150; 250). include a separation edge (60; 160; 260) of the annular flow (18; 118; 218), the said edge extending generally transversely in the direction of the annular flow, at a distance in a radial direction, a corresponding edge of the annular wall (28; 128; 228), the opening of the scoops (50; 150; 250) extending between the separation edge and the corresponding edge of the wall.

3. Stator in accordance with Claim 2, **characterized in that** the scoop(s) (50; 150; 250) comprise(s) a guide wall extending substantially in the direction of flow of the annular flow from the separation edge (60; 160; 260) to the annular wall.

4. Stator in accordance with one of Claims 1 to 3, **characterized in that** the scoop(s) (50; 150; 250) is/are located downstream of the blades (26; 126; 226).

5. Stator in accordance with Claim 4, **characterized in that** the blades (26; 126; 226) have an average spacing L4, the scoop extending circumferentially over more than 30% of the average spacing L4, more preferably 60%, more preferably more than 150%.

6. Stator in accordance with one of Claims 1 to 5, **characterized in that** the longitudinal section of the scoop(s) (50; 150; 250) has a curved profile, so as to gradually deflect a portion of the annular flow through the annular wall.

7. Stator in accordance with one of Claims 1 to 6, **characterized in that** the axial dimension of the passage (56; 156; 256) is greater than its radial dimension, preferably at least three times.

8. Stator in accordance with one of Claims 1 to 7, **characterized in that** the scoop(s) (50; 150; 250) and the annular wall (28; 128; 228) are integral, or preferably the scoops are produced by punching and drawing the annular wall.

9. Stator in accordance with one of Claims 1 to 8, **characterized in that** a part (162; 262) of the annular wall (128; 228) directly upstream of the opening of the scoop(s) (150; 250) is inclined so as to increase the section of the said opening.

10. Stator in accordance with one of Claims 1 to 9, **characterized in that** the stator comprises an outer wall (30; 36) substantially concentric with the annular wall (28; 128; 228), the blades (26; 126; 226) extending between the said walls.

11. Stator in accordance with Claim 10, **characterized in that** it comprises an intermediate housing (32) with two intermediate concentric annular walls (34; 36) attached to the inner and outer annular walls respectively, the said walls (34; 36) comprising arms of the housing (38) extending radially, the scoop(s) (50) being arranged in a circumferential direction at and/or upstream of the arms of the housing (38).

12. Axial compressor (4; 6) comprising at least one bladed stator, **characterized in that** the at least one stator is in accordance with one of Claims 1 to 11, the compressor (4; 6) preferably comprising a plurality of bladed stators, of which the downstream stator is in accordance with one of Claims 1 to 11.

13. Compressor (4; 6) in accordance with Claim 12, **characterized in that** the compressor comprises a drum and at least one annular row of rotor blades (24) mounted on the drum, the scoop(s) (50; 150; 250) being located axially downstream of the drum, or axially at the drum which has openings arranged axially in line with the scoop and radially inside the annular wall.

14. Axial turbomachine (2) comprising a compressor (4; 6) and/or a turbine (8) with at least one stator, wherein the or at least one of the stators is in accordance with one of Claims 1 to 11 and/or the compressor (4; 6) is in accordance with one of Claims 12 to 13, the turbomachine preferably comprising a lubrication housing (44), a pressurizing chamber (48) in communication with the scoop(s) (50; 150; 250), means of sealing (46) at the junction between the pressurizing chamber (48) and the lubrication housing (44).

15. Turbomachine (2) in accordance with Claim 14, **characterized in that** the internal shroud (28; 128; 228) surrounds the pressurized chamber (48), more preferably the internal shroud (28, 128, 228) comprises means of sealing (52; 54) upstream and downstream of the scoop (50; 150; 250).
